# EUROPEAN PATENT SPECIFICATION

(11) **EP 3 739 987 B1**
(45) Date of publication and mention of the grant of the patent: **13.12.2023**
(21) Application number: 20184130.1
(22) Date of filing: 01.07.2016
(51) Int. Cl.: H04W 72/02, H04W 72/21, H04W 72/23, H04W 72/04, H04W 84/04, H04W 72/0446, H04W 72/0453

(54) **TECHNIQUES FOR MANAGING A RESOURCE POOL IN WIRELESS COMMUNICATIONS**
TECHNIKEN ZUR VERWALTUNG EINES RESSOURCENPOOLS IN DRAHTLOSEN KOMMUNIKATIONEN
TECHNIQUES DE GESTION DE GROUPE DE RESSOURCES DANS DES COMMUNICATIONS SANS FIL

(30) Priority: 02.07.2015 US 201562188199 P; 30.06.2016 US 201615199640
(43) Date of publication of application: 18.11.2020
(62) Divisional of application: 16745910.6
(73) Proprietor: QUALCOMM Incorporated, San Diego, CA 92121-1714 (US)
(72) Inventor: GULATI, Kapil, San Diego, CA 92121-1714 (US); TAVILDAR, Saurabha Rangrao, San Diego, CA 92121-1714 (US); PATIL, Shailesh, San Diego, CA 92121-1714 (US); BAGHEL, Sudhir Kumar, San Diego, CA 92121-1714 (US); JIANG, Libin, San Diego, CA 92121-1714 (US)
(74) Representative: Bardehle Pagenberg Partnerschaft mbB Patentanwälte Rechtsanwälte

(56) References cited:
- WO-A1-2015/021185
- INTEL CORPORATION: "On Time Frequency Resources for SA Transmission", 3GPP DRAFT; R1-143764 INTEL - SA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20141006 - 20141010 27 September 2014 (2014-09-27), XP050869450, Retrieved from the Internet: URL:http://www.3gpp.org/ftp/tsg_ran/WG1_RL 1/TSGR1_78b/Docs/ [retrieved on 2014-09-27]
- NEC: "Distributed resource allocation and pre-emption access for Mode2 communication", 3GPP DRAFT; R1-143153, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Dresden, Germany; 20140818 - 20140822 17 August 2014 (2014-08-17), XP050788631, Retrieved from the Internet: URL:http://www.3gpp.org/ftp/Meetings_3GPP_ SYNC/RAN1/Docs/ [retrieved on 2014-08-17]
- NOKIA CORPORATION ET AL: "PD2DSCH contents", 3GPP DRAFT; R1-144980, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050876026, Retrieved from the Internet: URL:http://www.3gpp.org/ftp/Meetings_3GPP_ SYNC/RAN1/Docs/ [retrieved on 2014-11-17]
- CATT: "Resource pool configuration for D2D communication", 3GPP DRAFT; R1-143741, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20141006 - 20141010 27 September 2014 (2014-09-27), XP050869427, Retrieved from the Internet: URL:http://www.3gpp.org/ftp/tsg_ran/WG1_RL 1/TSGR1_78b/Docs/ [retrieved on 2014-09-27]
- ALCATEL-LUCENT SHANGHAI BELL ET AL: "Resource allocation and selection for scheduling assignment for D2D communication", 3GPP DRAFT; R1-143019 - RESOURCE ALLOCATION AND SELECTION FOR SCHEDULING ASSIGNMENT FOR D2D COMMUNICATION_FINAL, 3RD GENERATION PARTNERSHIP PROJECT (3GPP), MOBILE COMPETENCE CENTRE ; 650, ROUTE DES LU , vol. RAN WG1, no. Dresden, Germany; 20140818 - 20140822 10 August 2014 (2014-08-10), XP050815414, Retrieved from the Internet: URL:http://www.3gpp.org/ftp/tsg_ran/WG1_RL 1/TSGR1_78/Docs/ [retrieved on 2014-08-10]

## Description

### CROSS-REFERENCE TO RELATED APPLICATIONS

The present Application for Patent claims priority to U.S. Non-Provisional Application No. 15/199,640 entitled "TECHNIQUES FOR MANAGING A RESOURCE POOL IN WIRELESS COMMUNICATIONS" filed June 30, 2016 and U.S. Provisional Application No. 62/188,199 entitled "TECHNIQUES FOR MANAGING A RESOURCE POOL IN WIRELESS COMMUNICATIONS" filed July 2, 2015, which is assigned to the assignee hereof.

### BACKGROUND

Described herein are aspects generally related to communication systems, and more particularly, to techniques for managing a resource pool in wireless communications.

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of a telecommunication standard is Long Term Evolution (LTE). LTE is a set of enhancements to the Universal Mobile Telecommunications System (UMTS) mobile standard promulgated by Third Generation Partnership Project (3GPP). Recent developments in LTE include vehicle-to-vehicle (V2V), vehicle-to-pedestrian (V2P), vehicle-to-infrastructure (V2I), etc. communications (collectively referred to herein as "V2X") where vehicle-based user equipment (UE) can communicate with other UEs in a network directly with or without the assistance of a base station to schedule communication resources. For example, vehicle-based UEs can directly communicate messages to one another over the communication resources via LTE to indicate collision warnings, which can cause certain operations at the vehicles. In other examples, vehicle-based UEs can directly communicate periodic status reports to infrastructure, which can be reported to other network entities, etc.

In some wireless communication networks, including networks that involve V2X communications, inefficient and/or ineffective utilization of available communication resources, particularly control resources, may lead to latency in transmissions. Thus, improvements in the way in which resources are managed are desired. Relatedly, WO 2015/021185 A1 describes distributed scheduling for D2D communication, and 3GPP R1-143764 describes time freqeuncy resources for SA transmission.

### SUMMARY

The invention is defined by the claims.

### BRIEF DESCRIPTION OF THE DRAWINGS

The accompanying drawings are presented to aid in the description of various aspects of the disclosure and are provided solely for illustration of the aspects and not limitation thereof. The drawings include like reference numbers for like elements, and may represent optional components or actions using dashed lines.
FIG. 1 shows a block diagram conceptually illustrating an example of a telecommunications system, in accordance with aspects described herein.
FIG. 2 is a diagram illustrating an example of an access network.
FIG. 3 is a diagram illustrating an example of an evolved Node B and user equipment in an access network.
FIG. 4 is a diagram illustrating an example system in accordance with aspects described herein.
FIGs. 5A and 5B are conceptual diagrams illustrating example resource pool configurations in accordance with aspects described herein.
FIG. 6 is a flow chart of a method of managing a control resource pool at a UE in wireless communication in accordance with aspects described herein.
FIG. 7 is a flow chart of a method of managing a control resource pool at a base station in wireless communication in accordance with aspects described herein.
FIG. 8 is a conceptual data flow diagram illustrating the data flow between different means/components in an exemplary apparatus including a communicating component in accordance with various aspects of the present disclosure.
FIG. 9 is a diagram illustrating an example of a hardware implementation for an apparatus employing a processing system including a communicating component in accordance with various aspects of the present disclosure.
FIG. 10 is a conceptual data flow diagram illustrating the data flow between different means/components in an exemplary apparatus including a communicating component in accordance with various aspects of the present disclosure.
FIG. 11 is a diagram illustrating an example of a hardware implementation for an apparatus employing a processing system including a communicating component in accordance with various aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components are shown in block diagram form in order to avoid obscuring such concepts.

Several aspects of telecommunications systems will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more aspects, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), and floppy disk where disks usually reproduce data magnetically, while discs reproduce data optically with lasers. Combinations of the above should also be included within the scope of computer-readable media.

Described herein are various aspects related to managing resource pools for vehicle-to-vehicle (V2V), vehicle-to-pedestrian (V2P), vehicle-to-infrastructure (V2I), etc. communications (collectively referred to herein as "V2X") in an LTE-Direct (LTE-D) communication network. For example, in a V2V scenario with two vehicles communicating (e.g., two UEs), a transmitting UE may first transmit control information in a control resource pool that contains information on a destination group identifier (ID), modulation and coding scheme (MCS) of data, and/or time-frequency resources used by data. Further, in an aspect, a receiving UE in the V2V scenario listens to for control packets, and on the successful decoding of any received control packets, determines whether the receiving LTE belongs to the destination group ID transmitted in the control packet. If it is determined that the UE is a member of the destination group ID, then the UE may proceed with decoding the data on the resource indicated in the control packet. However, given the minimum periodicity for control resource pool of 40ms, this introduces a (worst-case) latency of at least 40ms from when the UE has data to transmit to the actual transmissions. Additionally, for applications, such as V2V applications, there is a motivation to reduce this latency.

In the claimed invention the present methods and apparatuses may provide an efficient solution, as compared to current solutions, by modifying the configuration of a resource pool for transmitting control and data resources. In other words, in the claimed invention, a network entity transmits an alternative resource pool information signal to one or more UEs in order for the UEs to modify their respective control and data transmission schemes. The alternative resource pool information indicates an alternative configuration for the resource pool, such as, for example, the control and data resources are time division multiplexed but with interleaved subframes to reduce latency, and/or the control and data resources are frequency division multiplexed. As such, the present aspects provide one or more mechanisms for receiving, at a UE, an alternative resource pool information from a network entity, wherein the alternative resource pool information signal corresponds to a configuration of a resource pool having the control resource pool and a data resource pool used for transmissions during wireless communications; selecting, at the UE, a first control resource from a first frequency portion of the control resource pool based on the alternative resource pool information; transmitting, at the UE, the first control resource from the first frequency portion of the control resource pool; selecting, at the UE, a second control resource from a second frequency portion of the control resource pool based on the first control resource; and transmitting, at the UE, the second control resource from the second frequency portion of the control resource pool. Moreover, the present aspects provide one or more other mechanisms for transmitting, from a network entity, an alternative resource pool information to one or more UEs, wherein the alternative resource pool information corresponds to a configuration of a resource pool for transmitting control resources and data resources during wireless communications; and receiving, at the network entity, one or more signals from one or more UEs, wherein the one or more signals correspond to at least one or both of control resources and data resources modified based on the alternative resource pool information. In an aspect, for V2X communications, a vehicle may include or may be associated with a UE receiving the alternative resource pool information.

Though described in terms of V2X communications, it is to be appreciated that the concepts described below with respect to optimizing resource pools can be applied to substantially any type of message-based communications to facilitate providing additional information regarding the messages for more accurate resource allocation by a base station or other network entity for communicating one or more of the individual messages.

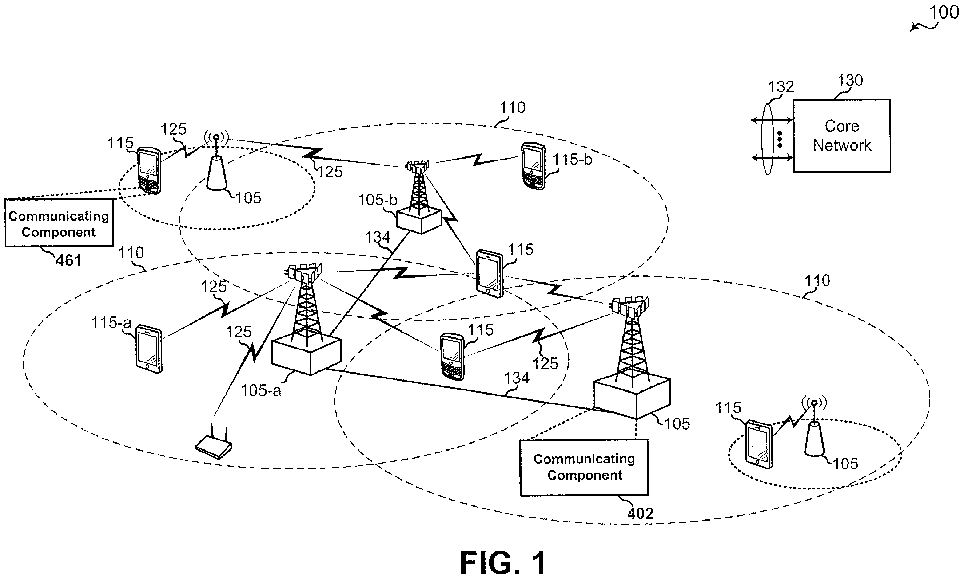

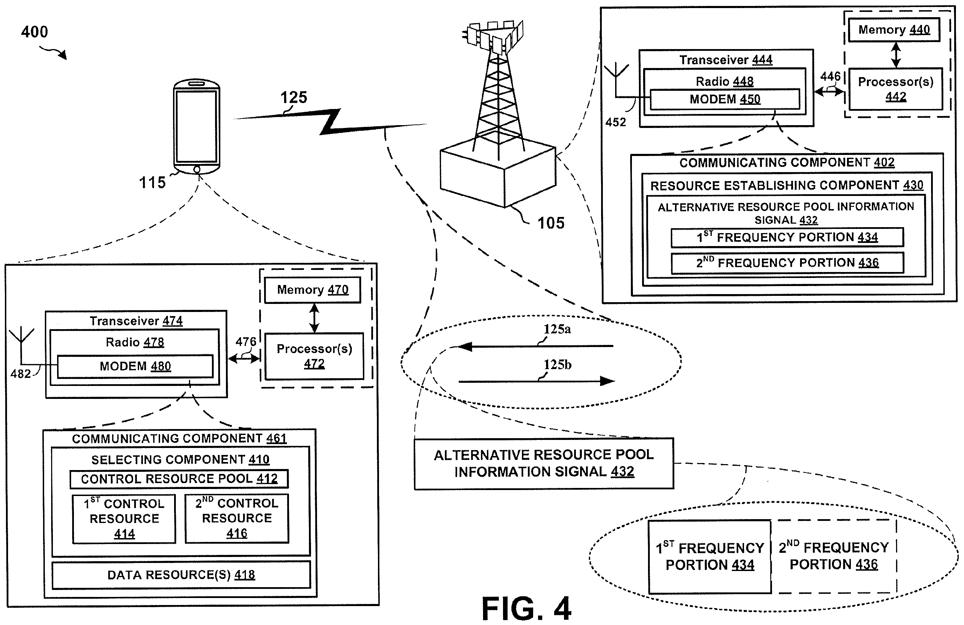

Referring first to FIG. 1, a diagram illustrates an example of a wireless communications system 100, in accordance with aspects described herein. The wireless communications system 100 includes a plurality of base stations (e.g., eNBs, WLAN access points, or other access points) 105, a number of user equipment (UEs) 115, and a core network 130. One or more UEs 115 may include a communicating component 461 *(see e.g.,* FIG. 4) configured to receive an alternative resource pool information signal and transmit control and data resources based on alternative resource pool information included in the signal. Similarly, one or more base stations 105 may include a communicating component 402 *(see e.g.,* FIG. 4) configured to establish and transmit one or more alternative resource pool information signals to one or more UEs 115 for modifying the configuration of the control and data resources.

For example, the UEs 115 may include vehicle-based UEs communicating using V2X communications (e.g., based on LTE radio access technology defined for device-to-device communications, such as LTE direct or LTE-D). Accordingly, for example, the UEs 115 may communicate with one another (e.g., with or without the assistance of a base station 105 to schedule resources) using a direct message-based communication. Some of the base stations 105 may communicate with the UEs 115 under the control of a base station controller (not shown), which may be part of the core network 130 or the certain base stations 105 (e.g., eNBs) in various examples. Base stations 105 may communicate control information and/or user data with the core network 130 through backhaul links 132. In examples, the base stations 105 may communicate, either directly or indirectly, with each other over backhaul links 134, which may be wired or wireless communication links. The wireless communications system 100 may support operation on multiple carriers (waveform signals of different frequencies). Multi-carrier transmitters can transmit modulated signals simultaneously on the multiple carriers. For example, each of communication links 125 may be a multi-carrier signal modulated according to the various radio technologies described above. Each modulated signal may be sent on a different carrier and may carry control information (e.g., reference signals, control channels, etc.), overhead information, data, etc.

The base stations 105 may wirelessly communicate with the UEs 115 via one or more base station antennas. Each of the base stations 105 sites may provide communication coverage for a respective coverage area 110. In some examples, base stations 105 may be referred to as a base transceiver station, a radio base station, a radio transceiver, a basic service set (BSS), an extended service set (ESS), a NodeB, eNodeB, Home NodeB, a Home eNodeB, or some other suitable terminology. The coverage area 110 for a base station may be divided into sectors making up only a portion of the coverage area (not shown). The wireless communications system 100 may include base stations 105 of different types (e.g., macro, micro, and/or pico base stations). The base stations 105 may also utilize different radio technologies, such as cellular and/or WLAN radio access technologies (RAT). The base stations 105 may be associated with the same or different access networks or operator deployments. The coverage areas of different base stations 105, including the coverage areas of the same or different types of base stations 105, utilizing the same or different radio technologies, and/or belonging to the same or different access networks, may overlap.

In LTE/LTE-Advanced (LTE-A), for example, the terms evolved Node B (eNodeB or eNB) may be generally used to describe the base stations 105. The wireless communications system 100 may be a Heterogeneous LTE/LTE-A network in which different types of access points provide coverage for various geographical regions. For example, each base station 105 may provide communication coverage for a macro cell, a pico cell, a femto cell, and/or other types of cell. Small cells such as pico cells, femto cells, and/or other types of cells may include low power nodes or LPNs. A macro cell generally covers a relatively large geographic area (e.g., several kilometers in radius) and may allow unrestricted access by UEs 115 with service subscriptions with the network provider. A small cell would generally cover a relatively smaller geographic area and may allow unrestricted access by UEs 115 with service subscriptions with the network provider, for example, and in addition to unrestricted access, may also provide restricted access by UEs 115 having an association with the small cell (e.g., UEs in a closed subscriber group (CSG), UEs for users in the home, and the like). An eNB for a macro cell may be referred to as a macro eNB. An eNB for a small cell may be referred to as a small cell eNB. An eNB may support one or multiple (e.g., two, three, four, and the like) cells.

The core network 130 may communicate with the eNBs or other base stations 105 via a backhaul links 132 (e.g., S1 interface, etc.). The base stations 105 may also communicate with one another, e.g., directly or indirectly via backhaul links 134 (e.g., X2 interface, etc.) and/or via backhaul links 132 (e.g., through core network 130). The wireless communications system 100 may support synchronous or asynchronous operation. For synchronous operation, the base stations 105 may have similar frame timing, and transmissions from different base stations 105 may be approximately aligned in time. For asynchronous operation, the base stations 105 may have different frame timing, and transmissions from different base stations 105 may not be aligned in time. The techniques described herein may be used for either synchronous or asynchronous operations.

The UEs 115 are dispersed throughout the wireless communications system 100, and each UE 115 may be stationary or mobile. A UE 115 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 115 may be a cellular phone, a personal digital assistant (PDA), a wireless modem, a wireless communication device, a handheld device, a tablet computer, a laptop computer, a cordless phone, a wearable item such as a watch or glasses, a wireless local loop (WLL) station, a vehicle-based UE, or the like. A UE 115 may be able to communicate with macro eNodeBs, small cell eNodeBs, relays, and the like. A UE 115 may also be able to communicate over different access networks, such as cellular or other WWAN access networks, or WLAN access networks.

The communication links 125 shown in wireless communications system 100 may include uplink (UL) transmissions from a UE 115 to a base station 105, and/or downlink (DL) transmissions, from a base station 105 to a UE 115. The downlink transmissions may also be called forward link transmissions while the uplink transmissions may also be called reverse link transmissions. The UEs 115 may be configured to collaboratively communicate with multiple base stations 105 through, for example, Multiple Input Multiple Output (MIMO), carrier aggregation (CA), Coordinated Multi-Point (CoMP), multiple connectivity, or other schemes. MIMO techniques use multiple antennas on the base stations 105 and/or multiple antennas on the UEs 115 to transmit multiple data streams.

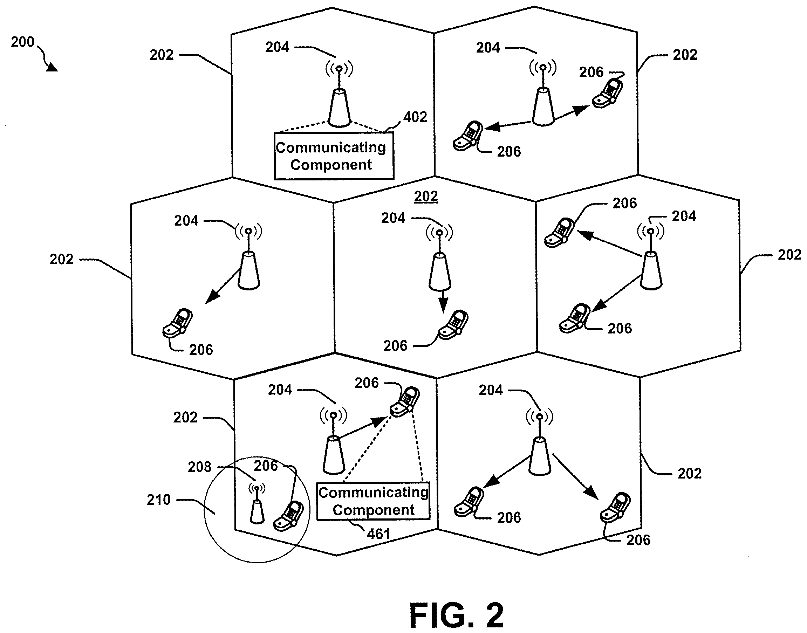

FIG. 2 is a diagram illustrating an example of an access network 200 in an LTE network architecture. In this example, the access network 200 is divided into a number of cellular regions (cells) 202. One or more lower power class base stations 208 may have cellular regions 210 that overlap with one or more of the cells 202. The lower power class base stations 208 may be a femto cell (e.g., home eNB (HeNB)), pico cell, micro cell, or remote radio head (RRH). The macro base stations 204 are each assigned to a respective cell 202 and are configured to provide an access point to the core network 130 for all the UEs 206 in the cells 202. As described, the UEs 206 may be vehicle-based UEs communicating using V2X or other message-based communication technologies.

In an aspect, one or more UEs 206 may include a communicating component 461 (*see e.g.,* FIG. 4) configured to generate a BSR indicating at least a number of messages and/or a size of the messages to facilitate allocation of resources to the one or more UEs 206. Similarly, one or more base stations 204/208 may include a communicating component 402 *(see e.g.,* FIG. 4) configured to establish and transmit one or more alternative resource pool information signals to one or more UEs 206 for modifying the configuration of the control and data resources. There is no centralized controller in this example of an access network 200, but a centralized controller may be used in alternative configurations. The base stations 204 are responsible for all radio related functions including radio bearer control, admission control, mobility control, scheduling, security, and connectivity to one or more components of core network 130.

The modulation and multiple access scheme employed by the access network 200 may vary depending on the particular telecommunications standard being deployed. In LTE applications, OFDM may be used on the DL and SC-FDMA may be used on the UL to support both frequency division duplexing (FDD) and time division duplexing (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The base stations 204 may have multiple antennas supporting MIMO technology. The use of MIMO technology enables the base stations 204 to exploit the spatial domain to support spatial multiplexing, beamforming, and transmit diversity. Spatial multiplexing may be used to transmit different streams of data simultaneously on the same frequency. The data steams may be transmitted to a single UE 206 to increase the data rate or to multiple UEs 206 to increase the overall system capacity. This is achieved by spatially precoding each data stream (i.e., applying a scaling of an amplitude and a phase) and then transmitting each spatially precoded stream through multiple transmit antennas on the DL. The spatially precoded data streams arrive at the UE(s) 206 with different spatial signatures, which enables each of the UE(s) 206 to recover the one or more data streams destined for that UE 206. On the UL, each UE 206 transmits a spatially precoded data stream, which enables the base stations 204 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use SC-FDMA in the form of a DFT-spread OFDM signal to compensate for high peak-to-average power ratio (PAPR).

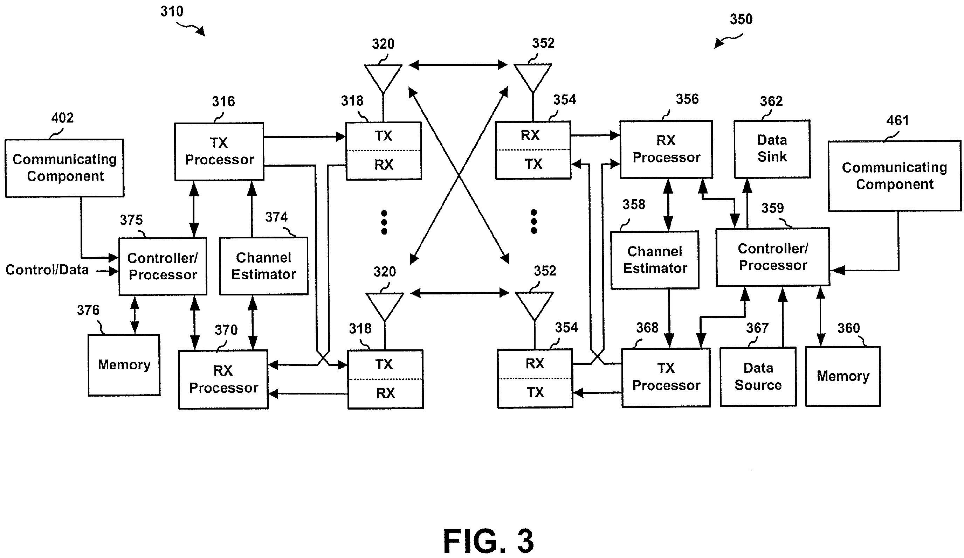

FIG. 3 is a block diagram of a base station 310 in communication with a UE 350 in an access network. In the DL, upper layer packets from the core network are provided to a controller/processor 375. The controller/processor 375 implements the functionality of the L2 layer. In the DL, the controller/processor 375 provides header compression, ciphering, packet segmentation and reordering, multiplexing between logical and transport channels, and radio resource allocations to the UE 350 based on various priority metrics. The controller/processor 375 is also responsible for HARQ operations, retransmission of lost packets, and signaling to the UE 350.

The transmit (TX) processor 316 implements various signal processing functions for the L1 layer (i.e., physical layer). The signal processing functions includes coding and interleaving to facilitate forward error correction (FEC) at the UE 350 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream is then provided to a different antenna 320 via a separate transmitter 318TX. Each transmitter 318TX modulates an RF carrier with a respective spatial stream for transmission. In addition, base station 310 may include a communicating component 402 *(see e.g.,* FIG. 4) configured to establish and transmit one or more alternative resource pool information signals to one or more UEs 350 for modifying the configuration of the control and data resources. Though communicating component 402 is shown as coupled to controller/processor 375, it is to be appreciated that communicating component 402 can also be coupled to other processors (e.g., RX processor 370, TX processor 316, etc.) and/or implemented by the one or more processors 316, 370, 375 to perform actions described herein. Furthermore, for example, communicating component 402 may be implemented by any one or more of the processors including, but not limited to, processors 316, 370, and/or 375. Similarly, communicating component 461 may be implemented by any one or more of the processors including, but not limited to, processors 356, 359, and/or 368.

At the UE 350, each receiver 354RX receives a signal through its respective antenna 352. Each receiver 354RX recovers information modulated onto an RF carrier and provides the information to the receive (RX) processor 356. The RX processor 356 implements various signal processing functions of the L1 layer. The RX processor 356 performs spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, is recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359.

The controller/processor 359 implements the L2 layer. The controller/processor can be associated with a memory 360 that stores program codes and data. The memory 360 may be referred to as a computer-readable medium. In the UL, the controller/processor 359 provides demultiplexing between transport and logical channels, packet reassembly, deciphering, header decompression, control signal processing to recover upper layer packets from the core network. The upper layer packets are then provided to a data sink 362, which represents all the protocol layers above the L2 layer. Various control signals may also be provided to the data sink 362 for L3 processing. The controller/processor 359 is also responsible for error detection using an acknowledgement (ACK) and/or negative acknowledgement (NACK) protocol to support HARQ operations. In addition, UE 350 may include a communicating component 461 *(see e.g.,* FIG. 4) configured to generate a BSR indicating at least a number of messages and/or a size of the messages to facilitate allocation of resources to the one or more UEs 350. Though communicating component 461 is shown as coupled to controller/processor 359, it is to be appreciated that communicating component 461 can also be coupled to other processors (e.g., RX processor 356, TX processor 368, etc.) and/or implemented by the one or more processors 356, 359, 368 to perform actions described herein.

In the UL, a data source 367 is used to provide upper layer packets to the controller/processor 359. The data source 367 represents all protocol layers above the L2 layer. Similar to the functionality described in connection with the DL transmission by the base station 310, the controller/processor 359 implements the L2 layer for the user plane and the control plane by providing header compression, ciphering, packet segmentation and reordering, and multiplexing between logical and transport channels based on radio resource allocations by the base station 310. The controller/processor 359 is also responsible for HARQ operations, retransmission of lost packets, and signaling to the base station 310.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 are provided to different antenna 352 via separate transmitters 354TX. Each transmitter 354TX modulates an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370. The RX processor 370 may implement the L1 layer.

The controller/processor 375 implements the L2 layer. The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover upper layer packets from the UE 350. Upper layer packets from the controller/processor 375 may be provided to the core network. The controller/processor 375 is also responsible for error detection using an ACK and/or NACK protocol to support HARQ operations.

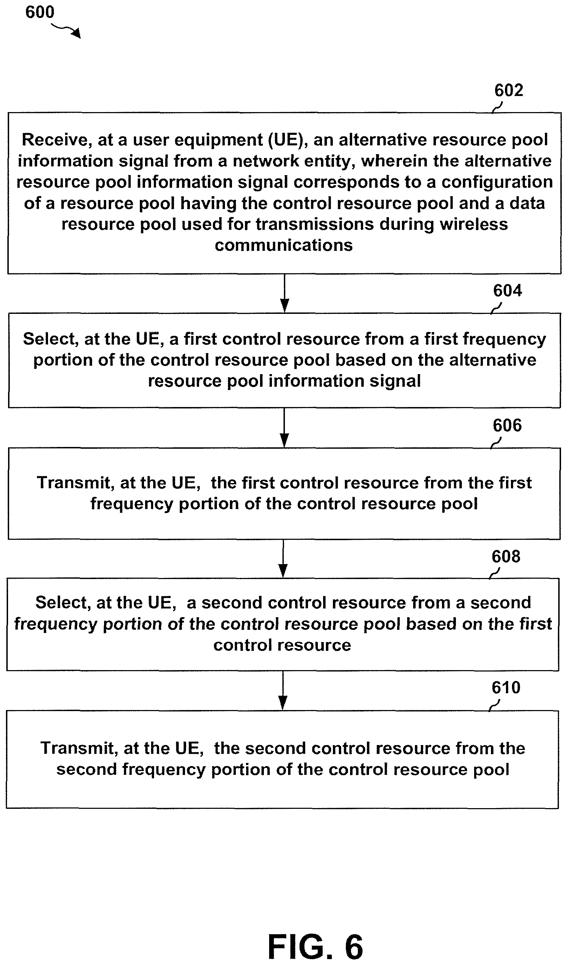

Referring to FIGs. 4-11, aspects are depicted with reference to one or more components and one or more methods that may perform the actions or functions described herein. In an aspect, the term "component" as used herein may be one of the parts that make up a system, may be hardware or software or some combination thereof, and may be divided into other components. Although the operations described below in FIGs. 6-11 are presented in a particular order and/or as being performed by an example component, it should be understood that the ordering of the actions and the components performing the actions may be varied, depending on the implementation. Moreover, it should be understood that the following actions or functions may be performed by a specially-programmed processor, a processor executing specially-programmed software or computer-readable media, or by any other combination of a hardware component and/or a software component capable of performing the described actions or functions.

Referring to FIG. 4, in an aspect, a wireless communications system 400 (which may be the same as or similar to wireless communications system and an access network 100 of FIG. 1) includes at least one UE 115 in communication coverage of at least one network entity, such as, base station 105. The base station 105 (collectively referred to as Evolved Universal Mobile Telecommunications System (UMTS) Terrestrial Radio Access Network (E-UTRAN)) may interface with an core network (such as core network 130 of FIG. 1) through backhaul links 132 (e.g., S1 interface). In an aspect, UE 115 may include one or more processors (not shown) and, optionally, memory (not shown), that may operate in combination with communicating component 461 to receive an alternative resource pool information signal and select control resources from a control resource pool based at least in part on the alternative resource pool information from base station 105. Similarly, in an aspect, base station 105 may include one or more processors and, optionally, memory that may operate in combination with communicating component 461 to establishing the alternative resource pool information to be transmitted to one or more UEs, such as UE 115 in order to modify control and data resources. The wireless communications between UE 115 and base station 105 may include signals transmitted by either the base station 105 or UE 115 via communication link 125, respectively. For example, with respect to the communication between UE 115 and base station 105, wireless communications may include one or more downlink channels 125a transmitted by base station 105 to UE 115, and one or more uplink channels 125b transmitted by UE 115 to base station 105. In an aspect, for example, base station 105 may transmit, via downlink channels 125a, one or more alternative resource pool information signals 432, which may be configured to include a first frequency portion 434 and a second frequency portion 436.

In accordance with the present disclosure, UE 115 may include a memory 470, one or more processors 472 and a transceiver 474. The memory, one or more processors 472 and the transceiver 474 may communicate internally via a bus 476. In some examples, the memory 470 and the one or more processors 472 may be part of the same hardware component (e.g., may be part of a same board, module, or integrated circuit). Alternatively, the memory 470 and the one or more processors 472 may be separate components that may act in conjunction with one another. In some aspects, the bus 476 may be a communication system that transfers data between multiple components and subcomponents of the UE 115. In some examples, the one or more processors 472 may include any one or combination of modem processor, baseband processor, digital signal processor, and/or transmit processor. Additionally or alternatively, the one or more processors 472 may include a communicating component 461 for carrying out one or more methods or procedures described herein. The communicating component 461 may comprise hardware, firmware, and/or software and may be configured to execute code or perform instructions stored in a memory (e.g., a computer-readable storage medium).

In some examples, the UE 115 may include the memory 470, such as for storing data used herein and/or local versions of applications or communicating component 461 and/or one or more of its subcomponents being executed by the one or more processors 472. Memory 470 can include any type of computer-readable medium usable by a computer or processor 472, such as random access memory (RAM), read only memory (ROM), tapes, magnetic discs, optical discs, volatile memory, non-volatile memory, and any combination thereof. In an aspect, for example, memory 470 may be a computer-readable storage medium (e.g., a non-transitory medium) that stores computer-executable code. The computer-executable code may define one or more operations or functions of communicating component 461 and/or one or more of its subcomponents, and/or data associated therewith. The computer-executable code may define these one or more operations or functions when UE 115 is operating processor 472 to execute rate adaptation component 30 and/or one or more of its subcomponents. In some examples, the UE 115 may further include a transceiver 474 for transmitting and/or receiving one or more data and control signals to/from an base station 105. The transceiver 474 may comprise hardware, firmware, and/or software and may be configured to execute code or perform instructions stored in a memory (e.g., a computer-readable storage medium). The transceiver 474 may include multiple radios and modems including radio 478 comprising a modem 480. The radio 478 may utilize one or more antennas 482 for transmitting signals to and receiving signals from a plurality of base stations, such as base station 105.

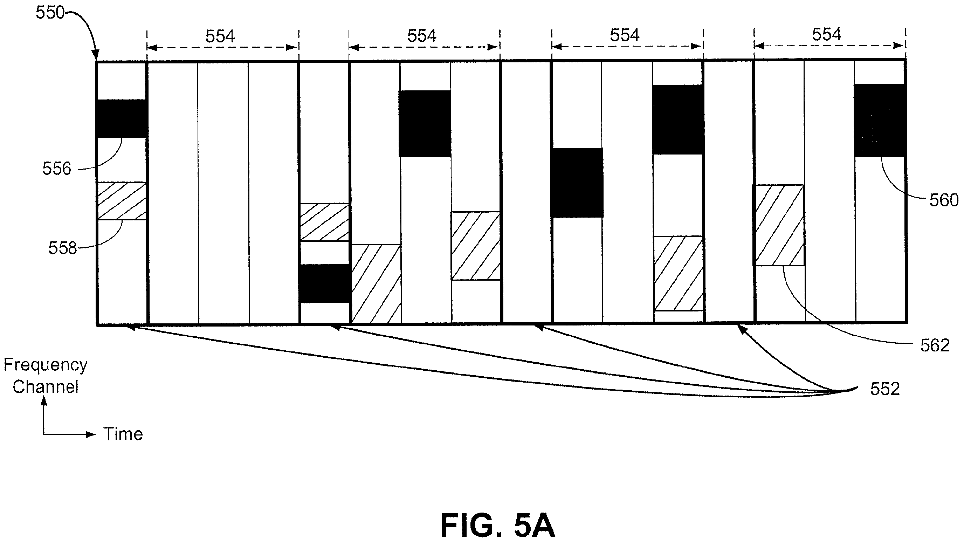

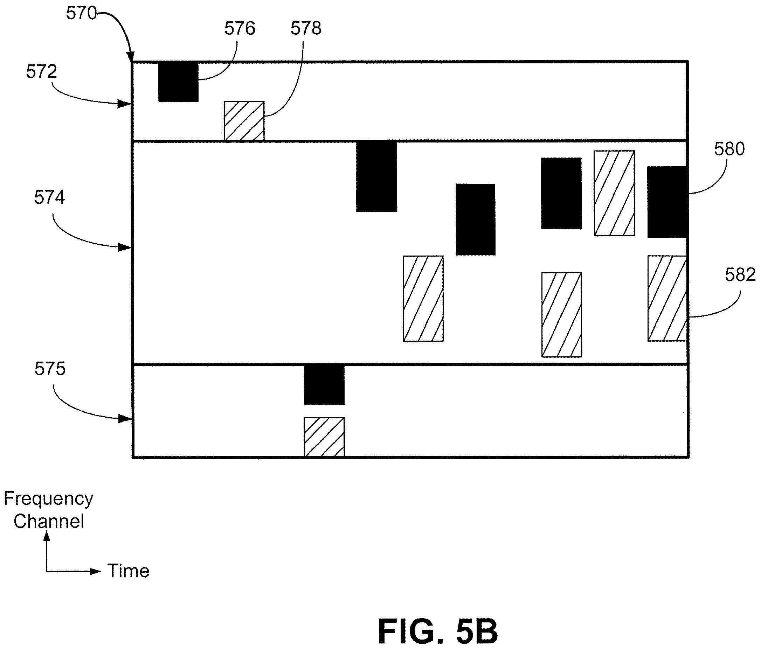

Communicating component 461 includes a selecting component 410 which is configured to select control resources for transmission. In the claimed invention, communicating component 461 receives alternative resource pool information signal 432 from base station 105 and/or communicating component 402. Selecting component 410 selects a first control resource 414 from a first frequency portion of the control resource pool 412 based on the alternative resource pool information 432. Further, selecting component 410 is configured to select a second control resource 416 from a second frequency portion of the control resource pool 412 based on the first control resource 414. Referring to FIGs. 5A and 5B, conceptual diagrams of the resource pool configurations indicated in an alternative resource pool information signal 432 (FIG. 4) are illustrated. With regard to FIG. 5A, alternative resource pool 550 illustrates an alternative TDM configuration in which the subframes are interleaved so as to reduce latency. In an aspect, for example, alternative resource pool 550 may include control resources 552 along with data resources 554 interleaved between each control resource 552. In certain instances, three data resource 554 subframes may be interleaved between each control resource 552. As such, a plurality of UEs, such as UE1 and UE2 may communicate with each other using the alternative resource pool 550 configuration. For example, UE1 may communicate control information 556 on control resources 552 and data information 560 on data resources 554, and UE2 may communicate control information 558 on control resources 552 and data information 562 on data resources 554. As shown, in the claimed invention, the control data 556 and 558 are retransmitted twice within the control resources 552 to maintain reliability of communication. In order to maintain this reliability of communication, in the claimed invention, data information 560 and 562 will only be transmitted after the second instance of control information 556 and 558 are transmitted. Therefore, the first instance of data resources 554 is shown to have no data transmissions since the second instance of control information 556 and 558 has not been transmitted yet. Moreover, once the second instance of control information 556 and 558 is transmitted then data information begins such as in the second instance of data resources 554. In the claimed invention, the control resources 552 are divided in to two portions including an upper frequency portion and a lower frequency portion. The upper frequency portion may be a negative frequency portion and the lower frequency portion may be a positive frequency portion. In the claimed invention, the first transmission of control information 556 and 558 is transmitted in the upper frequency portion while the second transmission of control information 556 and 558 is transmitted in the lower frequency portion.

With regard to FIG. 5B, alternative resource pool 570 illustrates an FDM configuration in which the control and data resources are divided based on frequency. The alternative resource pool 570 includes upper control resource 572 and lower control resource 575 along with data resource 574 interleaved between each control resource. In certain instances, the bandwidth provided to each resource may be configurable or predetermined. As such, a plurality of UEs, such as UE1 and UE2 may communicate with each other using the alternative resource pool 570 configuration. For example, UE1 may communicate control information 576 on control resources 572 and 575 and data information 580 on data resource 574, and UE2 may communicate control information 578 on control resources 572 and 575 and data information 582 on data resource 574. As shown, in the claimed invention, the control data 576 and 578 are retransmitted twice within the control resources 572 and 575 to maintain reliability of communication. In order to maintain this reliability of communication, data information 580 and 582 will only be transmitted after the second instance of control information 576 and 578 are transmitted. Therefore, once the second instance of control information 576 and 578 is transmitted then data information begins to be transmitted. In the claimed invention, as stated the control resources 572 and 575 are divided in to two portions including an upper frequency portion 572 and a lower frequency portion 575. The upper frequency portion may be a negative frequency portion and the lower frequency portion may be a positive frequency portion. In the claimed invention, the first transmission of control information 576 and 578 is transmitted in the upper frequency portion 572 while the second transmission of control information 576 and 578 is transmitted in the lower frequency portion 575.

Referring back to FIG. 4, communicating component 461 is configured to transmit both the first control resource 414 and the second control resource 416 subsequent to their respective selections. Communicating component 461 is further configured to transmit one or more data resources 418. In the invention, communicating component 461 transmits the one or more data resources 418 after the transmission of the second control resource 416. In certain instances, communicating component 461 may transmit the first control resource 414, the second control resource 416, and the one or more data resources 418 to one or more UEs and/or one or more base stations, such as, base station 105.

Similarly, in accordance with the present disclosure, base station 105 may include a memory 440, one or more processors 442 and a transceiver 444. The memory, one or more processors 442 and the transceiver 444 may communicate internally via a bus 446. In some examples, the memory 440 and the one or more processors 442 may be part of the same hardware component (e.g., may be part of a same board, module, or integrated circuit). Alternatively, the memory 440 and the one or more processors 442 may be separate components that may act in conjunction with one another. In some aspects, the bus 446 may be a communication system that transfers data between multiple components and subcomponents of the base station 105. In some examples, the one or more processors 442 may include any one or combination of modem processor, baseband processor, digital signal processor, and/or transmit processor. Additionally or alternatively, the one or more processors 442 may include a communicating component 402 for carrying out one or more methods or procedures described herein. The communicating component 402 may comprise hardware, firmware, and/or software and may be configured to execute code or perform instructions stored in a memory (e.g., a computer-readable storage medium).

In some examples, the base station 105 may include the memory 440, such as for storing data used herein and/or local versions of applications or communicating component 402 and/or one or more of its subcomponents being executed by the one or more processors 442. Memory 440 can include any type of computer-readable medium usable by a computer or processor 442, such as random access memory (RAM), read only memory (ROM), tapes, magnetic discs, optical discs, volatile memory, non-volatile memory, and any combination thereof. In an aspect, for example, memory 440 may be a computer-readable storage medium (e.g., a non-transitory medium) that stores computer-executable code. The computer-executable code may define one or more operations or functions of communicating component 402 and/or one or more of its subcomponents, and/or data associated therewith. The computer-executable code may define these one or more operations or functions when base station 105 is operating processor 442 to execute rate adaptation component 30 and/or one or more of its subcomponents. In some examples, the base station 105 may further include a transceiver 444 for transmitting and/or receiving one or more data and control signals to/from a UE, such as UE 115. The transceiver 444 may comprise hardware, firmware, and/or software and may be configured to execute code or perform instructions stored in a memory (e.g., a computer-readable storage medium). The transceiver 444 may include multiple radios and modems including radio 448 comprising a modem 450. The radio 448 may utilize one or more antennas 452 for transmitting signals to and receiving signals from a plurality of UEs, such as UE 115.

Communicating component 402 may include, or may otherwise be coupled or in communication with, one or more components, which may include a resource establishing component 430 for establishing an alternative resource pool information signal 432. For example, in an aspect, the alternative resource pool information signal 432 may correspond to a configuration of a resource pool for transmitting control resources and data resources during wireless communications. In an aspect, the control resources may be divided in to two portions, a first frequency portion 434 and a second frequency portion 436, and the information may be included in the alternative resource pool information signal 432 for establishing the scheme for transmitting control resources (e.g., first control resource 414 and second control resource 416).

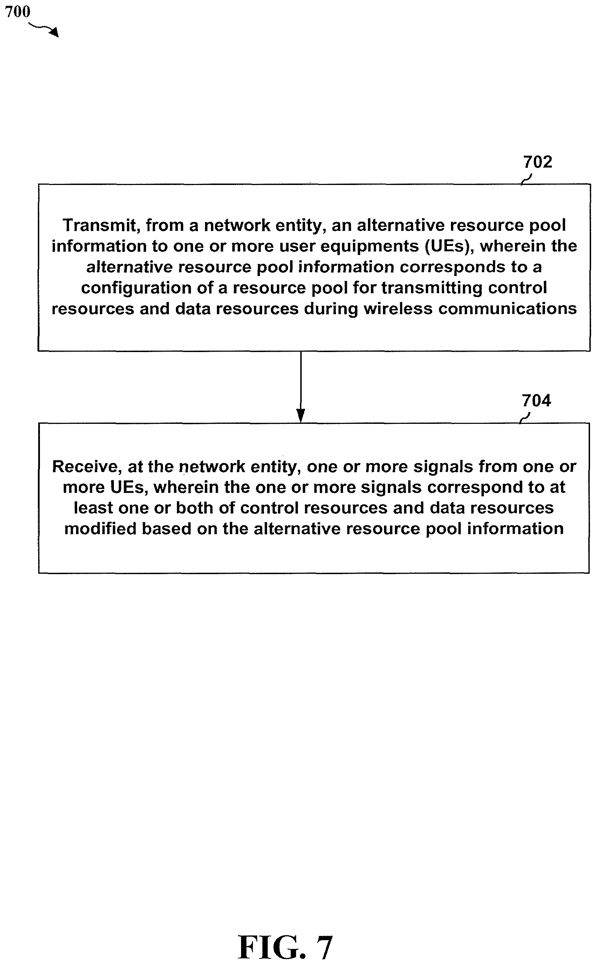

Referring to FIGs. 6 and 7, an example of one or more operations (FIGs. 6 and 7) and/or an example of architectural layout and functions and subfunctions (FIG. 4) of an aspect of a communicating component 461/402 (FIG. 4) according to the present apparatus and methods are described with reference to one or more methods and one or more functions that may perform the actions of these methods. Although the operations described below are presented in a particular order and/or as being performed by an example function, it should be understood that the ordering of the actions and the functions performing the actions may be varied, depending on the implementation. Also, although the communicating component 461/402 are illustrated as having a number of subfunctions/components, it should be understood that one or more of the illustrated subfunction/component may be separate from, but in communication with, the communicating component 461/402 and/or each other. Moreover, it should be understood that the following actions or functions described with respect to the processor(s) 472/442, memory 470/440, modem 480/450, and/or communicating component 461/402 and/or its subfunctions/components may be performed by a specially-programmed processor, a processor executing specially-programmed software or computer-readable media, or by any other combination of a hardware function and/or a software function specially configured for performing the described actions or functions.

In an aspect, at block 602 in FIG. 6, method 600 receives, at a UE, an alternative resource pool information signal from a network entity, wherein the alternative resource pool information signal corresponds to a configuration of a resource pool having the control resource pool and a data resource pool used for transmissions during wireless communications. As described herein with respect to FIG. 4, UE 115 executes communicating component 461 to receive an alternative resource pool information signal 432 from base station 105, wherein the alternative resource pool information signal 432 corresponds to a configuration of a resource pool having the control resource pool and a data resource pool used for transmissions during wireless communications. The alternative resource pool information signal 432 includes information corresponding to a configuration of a resource pool for transmitting control resources and data resources during wireless communications. The alternative resource pool information signal 432 includes information corresponding to the configuration of the control resource pool. The control resources are divided in to two portions, a first frequency portion 434 and a second frequency portion 436 as established by base station 105 and/or communicating component 402. Moreover, the UE 115 and the base station 105 may operate in a Long Term Evolution-Direct (LTE-D) network.

At block 604, method 600 selects, at the UE, a first control resource from a first frequency portion of the control resource pool based on the alternative resource pool information. As described herein with respect to FIG. 4, UE 115 and/or communicating component 461 executes selecting component 410 to select a first control resource 414 from a first frequency portion 434 of the control resource pool 412 based on the alternative resource pool information 432. In the claimed invention, UE 115 and/or communicating component 461 configures selecting component 410 to select the first control resource 414 such that the first control resource 414 is transmitted on the upper frequency half of the control resource pool 412.

Further, at block 606, method 600 transmits the first control resource from the first frequency portion of the control resource pool. As described herein with respect to FIG. 4, UE 115 executes communicating component 461 to transmit the first control resource 414 from the first frequency portion 434 of the control resource pool 412 . UE 115 and/or communicating component 461 transmits the first control resource 414 on the upper frequency half of the control resource pool 412 so that a receiving device is enabled to identify whether a control transmission is the first control resource 414 or the second control resource 416.

At block 608, method 600 selects, at the UE, a second control resource from a second frequency portion of the control resource pool based on the first control resource. As described herein with respect to FIG. 4, UE 115 and/or communicating component 461 executes selecting component 410 to select a second control resource 416 from a second frequency portion 436 of the control resource pool 412 based on the first control resource 414. In the claimed invention, UE 115 and/or communicating component 461 configures selecting component 410 to select the second control resource 416 such that the second control resource 416 is transmitted on the lower frequency half of the control resource pool 412.

At block 610, method 600 transmits at the LTE, the second control resource from the second frequency portion of the control resource pool. As described herein with respect to FIG. 4, UE 115 executes communicating component 461 to transmit the second control resource 416 from the second frequency portion 436 of the control resource pool 412. In the claimed invention, UE 115 and/or communicating component 461 transmits the second control resource 416 on the lower frequency half of the control resource pool 412 so that a receiving device is enabled to identify whether a control transmission is the first control resource 414 or the second control resource 416. Upon determination that the control transmission is a second control resource 416, the receiving device may be configured to decode data resources. As such, UE 115 and/or communicating component 461 transmits one or more data resources after the transmission of the second control resource. Additionally, coding information for decoding the one or more data resources is obtained from the control resource pool, and UE 115 and/or communicating component 461 may calculate a timing offset for the one or more data resources based on the second control resource. Moreover, in an aspect, the control resource pool and the one or more data resources may either be time division multiplexed (TDMed) with interleaved subframes or frequency division multiplexed (FDMed).

Referring back to FIG. 7, method 700 of wireless communication relates managing resource pools and includes, at block 702, method 700 transmits from a network entity, an alternative resource pool information to one or more UEs. As described herein with respect to FIG. 4, base station 105 executes communicating component 402 to transmit an alternative resource pool information 432 to one or more UEs (e.g., UE 115). The alternative resource pool information corresponds to a configuration of a resource pool for transmitting control resources and data resources during wireless communications. In the claimed invention, the control resources are divided in to two portions including an upper frequency portion and a lower frequency portion. The upper frequency portion may be a negative frequency portion and the lower frequency portion may be a positive frequency portion. Moreover, with regard to signaling the resource pool configuration, the configuration of the resource pool may be signaled using a repetitive bitmap (e.g., Control 1000 and Data 0111) within the resource pool. In the claimed invention, the configuration of the resource pool is signaled using a plurality of radio bearers (RBs) for control and data offsets. The configuration is signaled using {startRB, numRB} for control and data resources with respect to RB offset of both {0} and {max-RBs}. For LTE-D communications, the control and data resources may be allocated by a network entity, such as an eNodeB. The control time resource index indicated in Physical Downlink Control Channel (PDCCH) for control resource allocation may be the next available control subframe that occurs after at least a predefined number of subframes.

At block 704, method 700 receives at the network entity, one or more signals from one or more UEs, wherein the one or more signals correspond to both of control resources and data resources modified based on the alternative resource pool information. As described herein with respect to FIG. 4, base station 105 executes communicating component 402 (FIG. 4) to receive one or more signals from one or more UEs (e.g., UE 115), wherein the one or more signals correspond to at least both of control resources (e.g., first control resource 414 and second control resource 416) and data resources 418 modified based on the alternative resource pool information 432. For instance, in an example, the control resources and data resources may be either time division multiplexed (TDMed) with interleaved subframes or frequency division multiplexed (FDMed). Moreover, the one or more UEs and the network entity may operate in a Long Term Evolution-Direct (LTE-D) network.

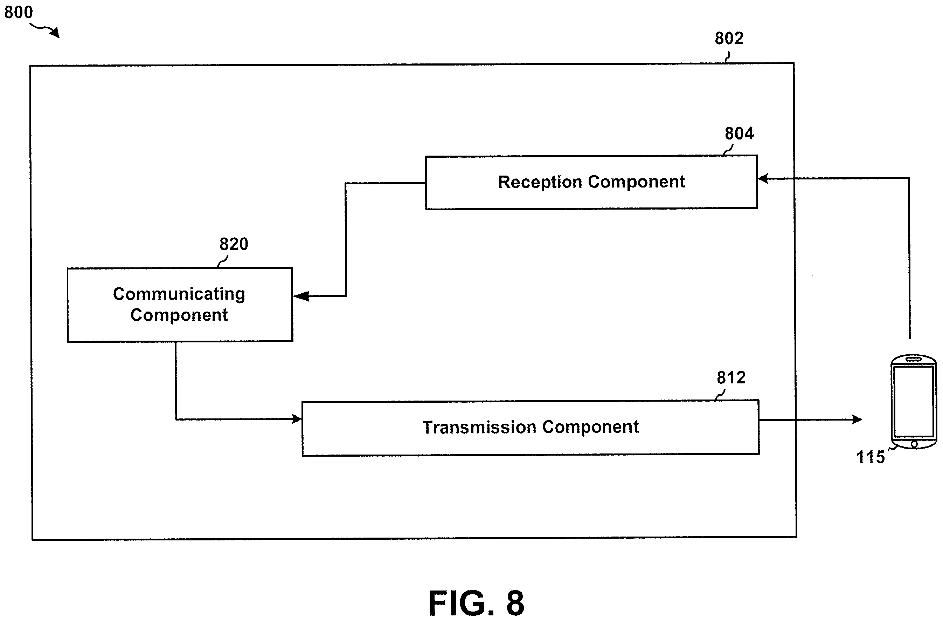

FIG. 8 is a conceptual data flow diagram 800 illustrating the data flow between different means/components in an exemplary apparatus 802 that includes communicating component 820, which may be the same as or similar to communicating component 402. The apparatus 802 may be a base station, which may include base station 105 of FIGs. 1 and 4. The apparatus 802 includes communicating component 820 that, establishes the alternative resource pool information to be transmitted to one or more UEs, such as UE 115 (FIG. 1) in order to modify control and data resources. The apparatus 802 further includes a transmission component 812 that transmits an alternative resource pool information signal to one or more UEs, such as UE 115, wherein the alternative resource pool information signal corresponds to a configuration of a resource pool for transmitting control resources and data resources during wireless communications. Further, apparatus 802 includes reception component 804 that receives one or more signals from at least one of the one or more UEs, wherein the one or more signals correspond to both of control resources and data resources modified based on the alternative resource pool information signal.

The apparatus may include additional components that perform each of the blocks of the algorithm in the aforementioned flowcharts of FIG. 8. As such, each block in the aforementioned flowcharts of FIG. 8 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

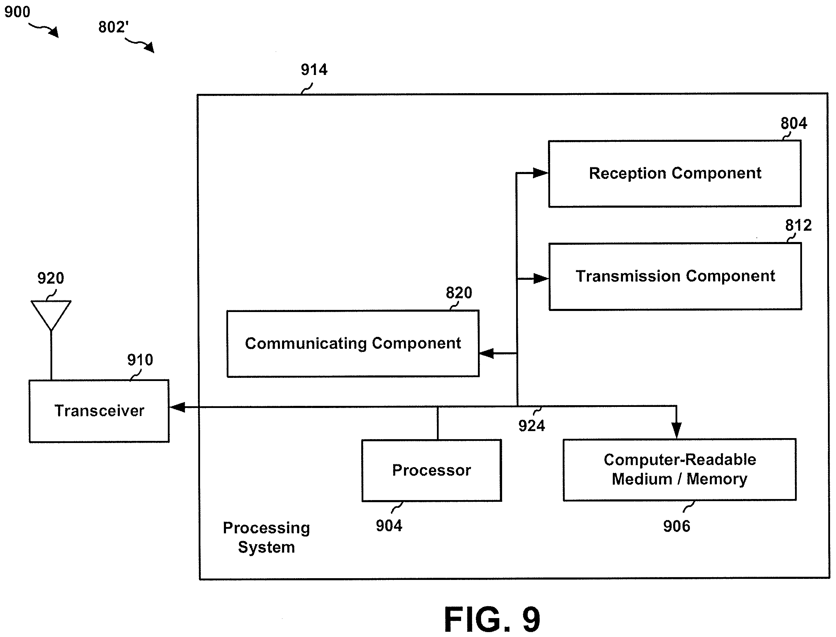

FIG. 9 is a diagram 900 illustrating an example of a hardware implementation for an apparatus 802' employing a processing system 914 that includes reference communicating component 820 (FIG. 8), which may be the same as or similar to communicating component 402 (FIG. 4). The processing system 914 may be implemented with a bus architecture, represented generally by the bus 924. The bus 924 may include any number of interconnecting buses and bridges depending on the specific application of the processing system 914 and the overall design constraints. The bus 924 links together various circuits including one or more processors and/or hardware components, represented by the processor 904, which may be the same as or similar to processor(s) 442 (FIG. 4), the components 804, 812, and 820, and the computer-readable medium / memory 906, which may be the same as or similar to memory 440 (FIG. 4). The bus 924 may also link various other circuits such as timing sources, peripherals, voltage regulators, and power management circuits, which are well known in the art, and therefore, will not be described any further.

The processing system 914 may be coupled to a transceiver 910. The transceiver 910 is coupled to one or more antennas 920. The transceiver 910 provides a means for communicating with various other apparatus over a transmission medium. The transceiver 910 receives a signal from the one or more antennas 920, extracts information from the received signal, and provides the extracted information to the processing system 914, specifically the reception component 804. In addition, the transceiver 910 receives information from the processing system 914, specifically the transmission component 98, and based on the received information, generates a signal to be applied to the one or more antennas 920. The processing system 914 includes a processor 904 coupled to a computer-readable medium / memory 906. The processor 904 is responsible for general processing, including the execution of software stored on the computer-readable medium / memory 906. The software, when executed by the processor 904, causes the processing system 914 to perform the various functions described *supra* for any particular apparatus. The computer-readable medium / memory 906 may also be used for storing data that is manipulated by the processor 904 when executing software. The processing system 914 further includes at least one of the components 804, 812, and 820. The components may be software components running in the processor 904, resident/stored in the computer readable medium / memory 906, one or more hardware components coupled to the processor 904, or some combination thereof.

The apparatus 902/802' for wireless communication includes means for establishing the alternative resource pool information to be transmitted to one or more UEs, such as UE 115 (FIG. 1) in order to modify control and data resources. The apparatus includes means for transmitting an alternative resource pool information signal to one or more UEs, wherein the alternative resource pool information signal corresponds to a configuration of a resource pool for transmitting control resources and data resources during wireless communications. Further, the apparatus 902/802' for wireless communication includes means for receiving one or more signals from at least one of the one or more UEs, wherein the one or more signals correspond to both of control resources and data resources modified based on the alternative resource pool information signal.

The aforementioned means may be one or more of the aforementioned components of the apparatus 902 and/or the processing system 914 of the apparatus 802' configured to perform the functions recited by the aforementioned means. As described *supra,* the processing system 914 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

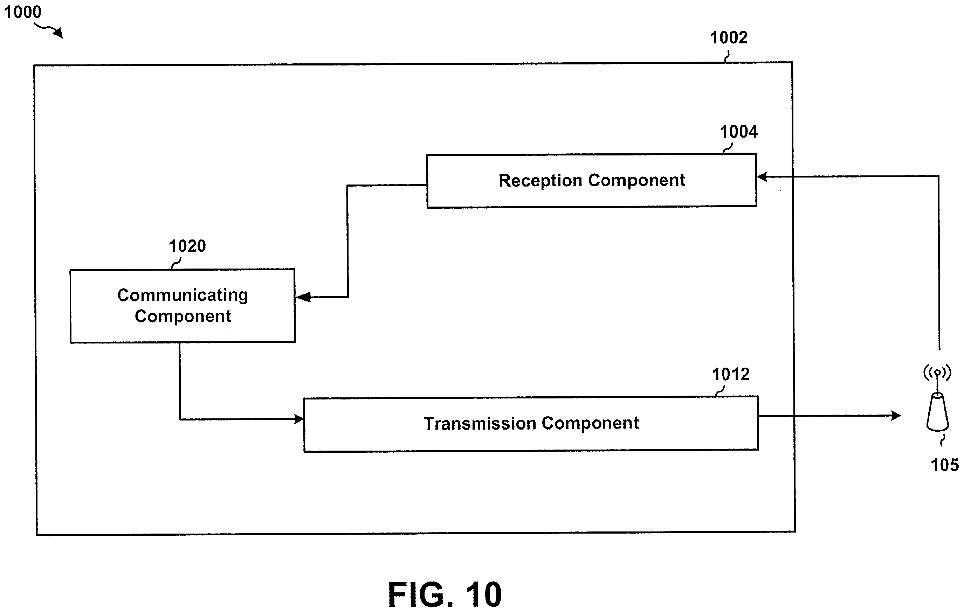

FIG. 10 is a conceptual data flow diagram 1000 illustrating the data flow between different means/components in an exemplary apparatus 1002 that includes communicating component 1020, which may be the same as or similar to communicating component 461. The apparatus 1002 may be a UE, which may include UE 115 of FIGs. 1 and 4. The apparatus 1002 includes reception component 1004 that, receives an alternative resource pool information signal from a network entity, such as base station 105, wherein the alternative resource pool information signal corresponds to a configuration of a resource pool having the control resource pool and a data resource pool used for transmissions during wireless communications. The apparatus 1002 includes communicating component 1020 that selects a first control resource from a first frequency portion of the control resource pool based on the alternative resource pool information signal. The apparatus 1002 further includes transmission component 1012 that transmits the first control resource from the first frequency portion of the control resource pool. The communicating component 1020 selects a second control resource from a second frequency portion of the control resource pool based on the first control resource. The transmission component 1012 transmits the second control resource from the second frequency portion of the control resource pool.

The apparatus may include additional components that perform each of the blocks of the algorithm in the aforementioned flowcharts of FIG. 10. As such, each block in the aforementioned flowcharts of FIG. 10 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

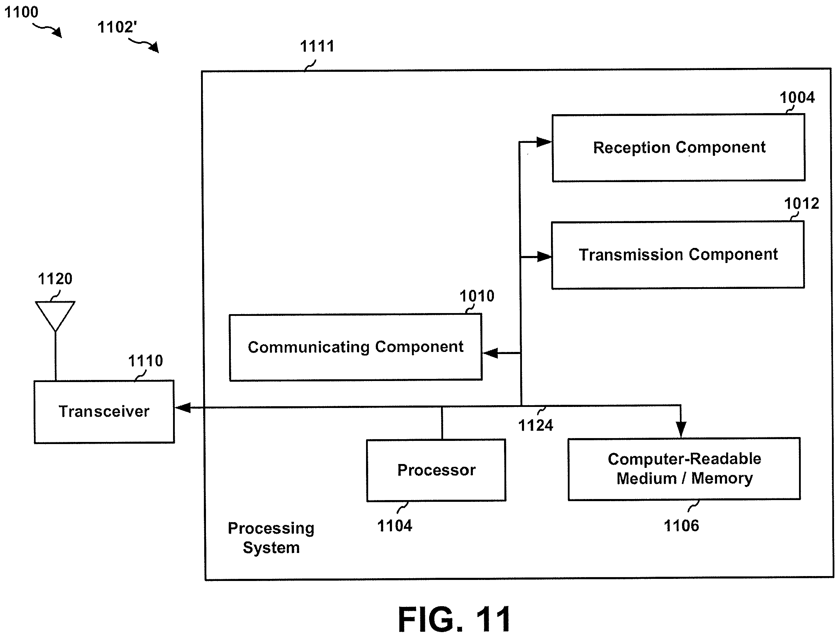

FIG. 11 is a diagram 1100 illustrating an example of a hardware implementation for an apparatus 1002' employing a processing system 1114 that includes communicating component 1020 (FIG. 10), which may be the same as or similar to communicating component 461 (FIG. 4). The processing system 1114 may be implemented with a bus architecture, represented generally by the bus 1124. The bus 1124 may include any number of interconnecting buses and bridges depending on the specific application of the processing system 1114 and the overall design constraints. The bus 1124 links together various circuits including one or more processors and/or hardware components, represented by the processor 1104, which may be the same as or similar to processor(s) 472 (FIG. 4), the components 1004, 1010, and 1012, and the computer-readable medium / memory 1106, which may be the same as or similar to memory 470 (FIG. 4). The bus 1124 may also link various other circuits such as timing sources, peripherals, voltage regulators, and power management circuits, which are well known in the art, and therefore, will not be described any further.

The processing system 1114 may be coupled to a transceiver 1110. The transceiver 1110 is coupled to one or more antennas 1120. The transceiver 1110 provides a means for communicating with various other apparatus over a transmission medium. The transceiver 1110 receives a signal from the one or more antennas 1120, extracts information from the received signal, and provides the extracted information to the processing system 1114, specifically the reception component 1004. In addition, the transceiver 1110 receives information from the processing system 1114, specifically the transmission component 1112, and based on the received information, generates a signal to be applied to the one or more antennas 1120. The processing system 1114 includes a processor 1104 coupled to a computer-readable medium / memory 1106. The processor 1104 is responsible for general processing, including the execution of software stored on the computer-readable medium / memory 1106. The software, when executed by the processor 1104, causes the processing system 1114 to perform the various functions described *supra* for any particular apparatus. The computer-readable medium / memory 1106 may also be used for storing data that is manipulated by the processor 1104 when executing software. The processing system 1114 further includes at least one of the components 1004, 1010, and 1012. The components may be software components running in the processor 1104, resident/stored in the computer readable medium / memory 1106, one or more hardware components coupled to the processor 1104, or some combination thereof.

The apparatus 1102/1002' for wireless communication includes means for receiving, at a UE, an alternative resource pool information signal from a network entity, wherein the alternative resource pool information signal corresponds to a configuration of a resource pool having the control resource pool and a data resource pool used for transmissions during wireless communications. The apparatus includes means for selecting, at the UE, a first control resource from a first frequency portion of the control resource pool based on the alternative resource pool information signal. Further, the apparatus 1102/1002' for wireless communication includes means for transmitting, at the UE, the first control resource from the first frequency portion of the control resource pool. The apparatus includes means for selecting, at the UE, a second control resource from a second frequency portion of the control resource pool based on the first control resource. The apparatus includes means for transmitting, at the UE, the second control resource from the second frequency portion of the control resource pool.

The aforementioned means may be one or more of the aforementioned components of the apparatus 1102 and/or the processing system 1114 of the apparatus 1002' configured to perform the functions recited by the aforementioned means. As described *supra,* the processing system 1114 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

## Claims

1. A method for managing a control resource pool in wireless communications, comprising:
receiving (602), at a user equipment, UE (115), an alternative resource pool information signal from a network entity (105) to modify a control and data transmission scheme used by the UE (115), the alternative resource pool information signal corresponding to a configuration of a resource pool having one or more control resources of the control resource pool and one or more data resources of a data resource pool used for transmissions during wireless communications, wherein each of the one or more control resources of the control resource pool are divided into a first frequency portion and a second frequency portion, wherein the first frequency portion corresponds to an upper frequency portion (572) and the second frequency portion corresponds to a lower frequency portion (575), and wherein the configuration of the resource pool is signaled using a plurality of radio bearers, RBs, based on a start RB value and a number RB value for the one or more control resources and the one or more data resources with respect to RB offset of both zero, "o", and a maximum RB value;
selecting (604), at the UE (115), a first control resource from the first frequency portion of the control resource pool based on the alternative resource pool information signal;
transmitting (606), at the UE (115), one or more control information (556, 558, 576, 578) on the first control resource from the first frequency portion of the control resource pool;
selecting (608), at the UE (115), a second control resource from the second frequency portion of the control resource pool based on the first control resource; and
transmitting (610), at the UE (115), the one or more control information (556, 558, 576, 578) on the second control resource from the second frequency portion of the control resource pool; and
transmitting data information (560, 562, 580, 582) on the one or more data resources after transmitting (606, 610) the one or more control information (556, 558, 576, 578) on the first control resource from the first frequency portion and the second control resource from the second frequency portion of the control resource pool.

2. The method of claim 1, wherein decoding information for decoding the one or more data resources is obtained from the control resource pool.

3. The method of claim 1, further comprising calculating a timing offset for the one or more data resources based on the second control resource.

4. The method of claim 1, wherein the control resource pool and the one or more data resources are time division multiplexed, TDMed, with interleaved subframes.

5. The method of claim 1, wherein the control resource pool and the one or more data resources are frequency division multiplexed, FDMed.

6. The method of claim 1, wherein the UE (115) and the network entity (105) operate in a Long Term Evolution-Direct, LTE-D, network.

7. An apparatus for managing a control resource pool in wireless communications, comprising:
means for receiving an alternative resource pool information signal from a network entity (105) to modify a control and data transmission scheme used by the UE (115), the alternative resource pool information signal corresponding to a configuration of a resource pool having one or more control resources of the control resource pool and one or more data resources of a data resource pool used for transmissions during wireless communications, wherein each of the one or more control resources of the control resource pool are divided into a first frequency portion and a second frequency portion, wherein the first frequency portion corresponds to an upper frequency portion (572) and the second frequency portion corresponds to a lower frequency portion (575), and wherein the configuration of the resource pool is signaled using a plurality of radio bearers, RBs, based on a start RB value and a number RB value for the one or more control resources and the one or more data resources with respect to RB offset of both zero, "o", and a maximum RB value;
means for selecting a first control resource from the first frequency portion of the control resource pool based on the alternative resource pool information signal;
means for transmitting one or more control information (556, 558, 576, 578) on the first control resource from the first frequency portion of the control resource pool;
means for selecting a second control resource from the second frequency portion of the control resource pool based on the first control resource; and
means for transmitting the one or more control information (556, 558, 576, 578) on the second control resource from the second frequency portion of the control resource pool; and
means for transmitting data information (560, 562, 580, 582) on the one or more data resources after transmitting the one or more control information (556, 558, 576, 578) on the first control resource from the first frequency portion and the second control resource from the second frequency portion of the control resource pool.

8. A method for managing resource pools in wireless communications, comprising:
transmitting (702), from a network entity (105), an alternative resource pool information signal to one or more user equipments, UEs (115) to modify a control and data transmission scheme used by the one or more UEs (115), the alternative resource pool information signal corresponding to a configuration of a resource pool having one or more control resources of a control resource pool and one or more data resources of a data resource pool used for transmissions during wireless communications, wherein each of the one or more control resources of the control resource pool are divided into a first frequency portion and a second frequency portion, wherein the first frequency portion corresponds to an upper frequency portion (572) and the second frequency portion corresponds to a lower frequency portion (575), and wherein transmissions from the one or more user equipments, UEs (115), of one or more control information on each of the one or more control resources occurs in the first frequency portion and the second frequency portion, and wherein the configuration of the resource pool is signaled using a plurality of radio bearers, RBs, based on a start RB value and a number RB value for the one or more control resources and the one or more data resources with respect to RB offset of both zero, "o", and a maximum RB value; and
receiving (704), at the network entity (105), one or more signals from at least one of the one or more UEs (115), wherein the one or more signals correspond to the one or more control information (556, 558, 576, 578) on the one or more control resources in the first and the second frequency portion; and
receiving, at the network entity (105), data information (560, 562, 580, 582) on the one or more data resources after said receiving the one or more control information.

9. The method of claim 8, wherein the configuration of the resource pool is signaled using a repetitive bitmap within the resource pool.

10. The method of claim 8, wherein the control resources and data resources are at least one of time division multiplexed, TDMed, with interleaved subframes or frequency division multiplexed, FDMed.

11. A network entity (105) for managing resource pools in wireless communications, comprising:
means for transmitting, from the network entity (105), an alternative resource pool information signal to one or more user equipments, UEs (115), to modify a control and data transmission scheme used by the one or more UEs (115), the alternative resource pool information signal corresponding to a configuration of a resource pool having one or more control resources of a control resource pool and one or more data resources of a data resource pool used for transmissions during wireless communications, wherein each of the one or more control resources of the control resource pool are divided into a first frequency portion and a second frequency portion, wherein the first frequency portion corresponds to an upper frequency portion (572) and the second frequency portion corresponds to a lower frequency portion (575), and wherein transmissions from the one or more user equipments, UEs (115), of one or more control information on each of the one or more control resources occurs in the first frequency portion and the second frequency portion, and wherein the configuration of the resource pool is signaled using a plurality of radio bearers, RBs, based on a start RB value and a number RB value for the one or more control resources and the one or more data resources with respect to RB offset of both zero, "o", and a maximum RB value; and
means for receiving, at the network entity (105), one or more signals from at least one of the one or more UEs (115), wherein the one or more signals correspond to the one or more control information (556, 558, 576, 578) on the one or more control resources in the first and the second frequency portion; and
means for receiving, at the network entity (105), data information (560, 562, 580, 582) on the one or more data resources after said receiving the one or more control information.

12. A computer program product, comprising:
a computer-readable medium, comprising program code causing a computer to perform a method according to any of the claims 1 to 6, or 8 to 10, when executed.

## Patentansprüche

1. Ein Verfahren zum Verwalten eines Steuerressourcenpools in drahtlosen Kommunikationen, aufweisend:
Empfangen (602), an einem Benutzergerät, UE (115), eines alternativen Ressourcenpoolinformationssignals von einer Netzwerkeinheit (105), um ein Steuer- und Datenübertragungsschema zu modifizieren, das vom UE (115) verwendet wird, wobei das alternative Ressourcenpoolinformationssignal einer Konfiguration eines Ressourcenpools entspricht, der eine oder mehrere Steuerressourcen des Steuerressourcenpools und eine oder mehrere Datenressourcen eines Datenressourcenpools aufweist, die für Übertragungen während drahtloser Kommunikationen verwendet werden, wobei jede der einen oder mehreren Steuerressourcen des Steuerressourcenpools in einen ersten Frequenzabschnitt und einen zweiten Frequenzabschnitt unterteilt ist, wobei der erste Frequenzabschnitt einem oberen Frequenzabschnitt (572) entspricht und der zweite Frequenzabschnitt einem unteren Frequenzabschnitt (575) entspricht, und wobei die Konfiguration des Ressourcenpools unter Verwendung einer Mehrzahl von Funkträgern, RBs, basierend auf einem Start-RB-Wert und einem Anzahl-RB-Wert für die eine oder mehreren Steuerressourcen und die eine oder mehreren Datenressourcen in Bezug auf einen RB-Versatz von sowohl Null, "o", als auch einem maximalen RB-Wert signalisiert wird;
Auswählen (604), an dem UE (115), einer ersten Steuerressource aus dem ersten Frequenzabschnitt des Steuerressourcenpools basierend auf dem alternativen Ressourcenpoolinformationssignal;
Übertragen (606), an das UE (115), einer oder mehrerer Steuerinformationen (556, 558, 576, 578) auf der ersten Steuerressource aus dem ersten Frequenzabschnitt des Steuerressourcenpools;
Auswählen (608), an dem UE (115), einer zweiten Steuerressource aus dem zweiten Frequenzabschnitt des Steuerressourcenpools basierend auf der ersten Steuerressource; und
Übertragen (610), an dem UE (115), der einen oder mehreren Steuerinformationen (556, 558, 576, 578) auf der zweiten Steuerressource aus dem zweiten Frequenzabschnitt des Steuerressourcenpools; und
Übertragen von Dateninformationen (560, 562, 580, 582) auf der einen oder den mehreren Datenressourcen nach Übertragen (606, 610) der einen oder mehreren Steuerinformationen (556, 558, 576, 578) auf der ersten Steuerressource aus dem ersten Frequenzabschnitt und der zweiten Steuerressource aus dem zweiten Frequenzabschnitt des Steuerressourcenpools.

2. Das Verfahren nach Anspruch 1, wobei Decodierungsinformationen zum Decodieren der einen oder mehreren Datenressourcen aus dem Steuerressourcenpool erhalten werden.

3. Das Verfahren nach Anspruch 1, weiter aufweisend Berechnen eines Zeitversatzes für die eine oder mehreren Datenressourcen basierend auf der zweiten Steuerressource.

4. Das Verfahren nach Anspruch 1, wobei der Steuerressourcenpool und die eine oder mehreren Datenressourcen zeitteilungsmultiplexiert, TDMed, mit verschachtelten Unterrahmen sind.

5. Das Verfahren nach Anspruch 1, wobei der Steuerressourcenpool und die eine oder mehreren Datenressourcen frequenzteilungsmultiplexiert, FDMed, sind.

6. Das Verfahren nach Anspruch 1, wobei das UE (115) und die Netzwerkeinheit (105) in einem Long Term Evolution-Direct, LTE-D-, Netzwerk arbeiten.

7. Eine Vorrichtung zum Verwalten eines Steuerressourcenpools in drahtlosen Kommunikationen, aufweisend:
Mittel zum Empfangen eines alternativen Ressourcenpoolinformationssignals von einer Netzwerkeinheit (105), um ein Steuer- und Datenübertragungsschema zu modifizieren, das vom UE (115) verwendet wird, wobei das alternative Ressourcenpoolinformationssignal einer Konfiguration eines Ressourcenpools entspricht, der eine oder mehrere Steuerressourcen des Steuerressourcenpools und
eine oder mehrere Datenressourcen eines Datenressourcenpools aufweist, die für Übertragungen während drahtloser Kommunikationen verwendet werden, wobei jede der einen oder mehreren Steuerressourcen des Steuerressourcenpools in einen ersten Frequenzabschnitt und einen zweiten Frequenzabschnitt unterteilt ist, wobei der erste Frequenzabschnitt einem oberen Frequenzabschnitt (572) entspricht und
der zweite Frequenzabschnitt einem unteren Frequenzabschnitt (575) entspricht,
und wobei die Konfiguration des Ressourcenpools unter Verwendung einer Mehrzahl von Funkträgern, RBs, basierend auf einem Start-RB-Wert und einem Anzahl-RB-Wert für die eine oder mehreren Steuerressourcen und die eine oder mehreren Datenressourcen in Bezug auf RB-Versatz von sowohl Null, "0", als auch einem maximalen RB-Wert signalisiert wird;
Mittel zum Auswählen einer ersten Steuerressource aus dem ersten Frequenzabschnitt des Steuerressourcenpools basierend auf dem alternativen Ressourcenpoolinformationssignal;
Mittel zum Übertragen einer oder mehrerer Steuerinformationen (556, 558, 576, 578) auf der ersten Steuerressource aus dem ersten Frequenzabschnitt des Steuerressourcenpools;
Mittel zum Auswählen einer zweiten Steuerressource aus dem zweiten Frequenzabschnitt des Steuerressourcenpools basierend auf der ersten Steuerressource; und
Mittel zum Übertragen der einen oder mehreren Steuerinformationen (556, 558, 576, 578) auf der zweiten Steuerressource aus dem zweiten Frequenzabschnitt des Steuerressourcenpools; und
Mittel zum Übertragen von Dateninformationen (560, 562, 580, 582) auf der einen oder den mehreren Datenressourcen nach Übertragen der einen oder mehreren Steuerinformationen (556, 558, 576, 578) auf der ersten Steuerressource aus dem ersten Frequenzabschnitt und der zweiten Steuerressource aus dem zweiten Frequenzabschnitt des Steuerressourcenpools.

8. Ein Verfahren zum Verwalten von Ressourcenpools in drahtlosen Kommunikationen, aufweisend:
Übertragen (702), von einer Netzwerkeinheit (105), eines alternativen Ressourcenpoolinformationssignals an eine oder mehrere Benutzergeräte, UEs (115), um ein Steuer- und Datenübertragungsschema zu modifizieren, das von dem einen oder den mehreren UEs (115) verwendet wird, wobei das alternative Ressourcenpoolinformationssignal einer Konfiguration eines Ressourcenpools entspricht, der eine oder mehrere Steuerressourcen eines Steuerressourcenpools und eine oder mehrere Datenressourcen eines Datenressourcenpools aufweist, die für Übertragungen während drahtloser Kommunikationen verwendet werden, wobei jede der einen oder mehreren Steuerressourcen des Steuerressourcenpools in einen ersten Frequenzabschnitt und einen zweiten Frequenzabschnitt unterteilt ist, wobei der erste Frequenzabschnitt einem oberen Frequenzabschnitt (572) entspricht und der zweite Frequenzabschnitt einem unteren Frequenzabschnitt (575) entspricht, und wobei Übertragungen von dem einen oder den mehreren Benutzergeräten, UEs (115), von einer oder mehreren Steuerinformationen auf jeder der einen oder mehreren Steuerressourcen in dem ersten Frequenzabschnitt und in dem zweiten Frequenzabschnitt auftreten, und wobei die Konfiguration des Ressourcenpools unter Verwendung einer Mehrzahl von Funkträgern, RBs, basierend auf einem Start-RB-Wert und einem Anzahl-RB-Wert für die eine oder mehreren Steuerressourcen und die eine oder mehreren Datenressourcen in Bezug auf den RB-Versatz von sowohl Null, "o", als auch einem maximalen RB-Wert signalisiert wird; und
Empfangen (704), an der Netzwerkeinheit (105), eines oder mehrerer Signale von mindestens einem der einen oder mehreren UEs (115), wobei das eine oder die mehreren Signale der einen oder den mehreren Steuerinformationen (556, 558, 576, 578) auf der einen oder den mehreren Steuerressourcen in dem ersten und in dem zweiten Frequenzabschnitt entsprechen; und
Empfangen, an der Netzwerkeinheit (105), von Dateninformationen (560, 562, 580, 582) auf der einen oder den mehreren Datenressourcen nach dem Empfangen der einen oder mehreren Steuerinformationen.

9. Das Verfahren nach Anspruch 8, wobei die Konfiguration des Ressourcenpools unter Verwendung einer sich wiederholenden Bitmap innerhalb des Ressourcenpools signalisiert wird.

10. Das Verfahren nach Anspruch 8, wobei die Steuerressourcen und Datenressourcen mindestens eines von zeitteilungsmultiplexiert, TDMed, mit verschachtelten Unterrahmen oder frequenzteilungsmultiplexiert, FDMed, sind.

11. Eine Netzwerkeinheit (105) zum Verwalten von Ressourcenpools in drahtlosen Kommunikationen, aufweisend:
Mittel zum Senden, von der Netzwerkeinheit (105), eines alternativen Ressourcenpoolinformationssignals an ein oder mehrere Benutzergeräte, UEs (115), um ein Steuer- und Datenübertragungsschema zu modifizieren, das durch das eine oder die mehreren UEs (115) verwendet wird, wobei das alternative Ressourcenpoolinformationssignal einer Konfiguration eines Ressourcenpools entspricht, der eine oder mehrere Steuerressourcen eines Steuerressourcenpools und eine oder mehrere Datenressourcen eines Datenressourcenpools aufweist, die für Übertragungen während drahtloser Kommunikationen verwendet werden, wobei jede der einen oder mehreren Steuerressourcen des Steuerressourcenpools in einen ersten Frequenzabschnitt und einen zweiten Frequenzabschnitt unterteilt ist, wobei der erste Frequenzabschnitt einem oberen Frequenzabschnitt (572) entspricht und der zweite Frequenzabschnitt einem unteren Frequenzabschnitt (575) entspricht, und wobei Übertragungen von den einen oder mehreren Benutzergeräten, UEs (115), von einer oder mehreren Steuerinformationen auf jeder der einen oder mehreren Steuerressourcen in dem ersten Frequenzabschnitt und in dem zweiten Frequenzabschnitt auftreten, und wobei die Konfiguration des Ressourcenpools unter Verwendung einer Mehrzahl von Funkträgern, RBs, basierend auf einem Start-RB-Wert und einem Anzahl-RB-Wert für die eine oder mehreren Steuerressourcen und die eine oder mehreren Datenressourcen in Bezug auf einen RB-Versatz von sowohl Null, "o", als auch einem maximalen RB-Wert signalisiert wird; und
Mittel zum Empfangen, an der Netzwerkeinheit (105), eines oder mehrerer Signale von mindestens einem der einen oder mehreren UEs (115), wobei das eine oder die mehreren Signale der einen oder den mehreren Steuerinformationen (556, 558, 576, 578) auf der einen oder den mehreren Steuerressourcen in dem ersten und in dem zweiten Frequenzabschnitt entsprechen; und
Mittel zum Empfangen, an der Netzwerkeinheit (105), von Dateninformationen (560, 562, 580, 582) auf der einen oder den mehreren Datenressourcen nach dem Empfangen der einen oder mehreren Steuerinformationen.

12. Ein Computerprogrammprodukt, aufweisend:
ein computerlesbares Medium, aufweisend Programmcode, der einen Computer veranlasst, ein Verfahren nach einem der Ansprüche 1 bis 6, oder 8 bis 10 durchzuführen, wenn er ausgeführt wird.

## Revendications

1. Un procédé de gestion d'un pool de ressources de contrôle dans des communications sans fil, comprenant :
la réception (602), au niveau d'un équipement utilisateur, UE (115), d'un signal d'information de pool de ressources de substitution à partir d'une entité de réseau (105) pour modifier un schéma de transmission de données et de contrôles utilisé par l'UE (115), le signal d'information de pool de ressources de substitution correspondant à une configuration d'un pool de ressources comportant une ou plusieurs ressources de contrôle du pool de ressources de contrôle et une ou plusieurs ressources de données d'un pool de ressources de données utilisé pour des transmissions pendant des communications sans fil, dans lequel chacune des une ou plusieurs ressources de contrôle du pool de ressources de contrôle est divisée en une première partie de fréquences et une seconde partie de fréquences, dans lequel la première partie de fréquences correspond à une partie de fréquences supérieure (572) et la seconde partie de fréquences correspond à une partie de fréquences inférieure (575), et dans lequel la configuration du pool de ressources est signalée en utilisant une pluralité de bearers radio, RB, sur la base d'une valeur RB de départ et d'une valeur RB de numéro pour les une ou plusieurs ressources de contrôle et les une ou plusieurs ressources de données par rapport à un décalage RB à la fois de zéro, « 0 », et d'une valeur RB maximale ;
la sélection (604), au niveau de l'UE (115), d'une première ressource de contrôle à partir de la première partie de fréquences du pool de ressources de contrôle sur la base du signal d'information de pool de ressources de substitution ;
la transmission (606), au niveau de l'UE (115), d'une ou plusieurs informations de contrôle (556, 558, 576, 578) sur la première ressource de contrôle à partir de la première partie de fréquences du pool de ressources de contrôle ;
la sélection (608), au niveau de l'UE (115), d'une seconde ressource de contrôle à partir de la seconde partie de fréquences du pool de ressources de contrôle sur la base de la première ressource de contrôle ; et
la transmission (610), au niveau de l'UE (115), des une ou plusieurs informations de contrôle (556, 558, 576, 578) sur la seconde ressource de contrôle à partir de la seconde partie de fréquences du pool de ressources de contrôle ; et
la transmission d'informations de données (560, 562, 580, 582) sur les une ou plusieurs ressources de données après transmission (606, 610) des une ou plusieurs informations de contrôle (556, 558, 576, 578) sur la première ressource de contrôle à partir de la première partie de fréquences et sur la seconde ressource de contrôle à partir de la seconde partie de fréquences du pool de ressources de contrôle.

2. Le procédé selon la revendication 1, dans lequel une information de décodage pour le décodage des une ou plusieurs ressources de données est obtenue à partir du pool de ressources de contrôle.

3. Le procédé selon la revendication 1, comprenant en outre le calcul d'un décalage de séquencement pour les une ou plusieurs ressources de données sur la base de la seconde ressource de contrôle.

4. Le procédé selon la revendication 1, dans lequel le pool de ressources de contrôle et les une ou plusieurs ressources de données sont soumis à un multiplexage par répartition dans le temps, TDM, avec des sous-trames entrelacées.

5. Le procédé selon la revendication 1, dans lequel le pool de ressources de contrôle et les une ou plusieurs ressources de données sont soumis à un multiplexage par répartition en fréquence, FDM.

6. Le procédé selon la revendication 1, dans lequel l'UE (115) et l'entité de réseau (105) fonctionnent dans un réseau Long Term Evolution-Direct, LTE-D.

7. Un appareil pour la gestion d'un pool de ressources de contrôle dans des communications sans fil, comprenant :
un moyen pour recevoir un signal d'information de pool de ressources de substitution à partir d'une entité de réseau (105) pour modifier un schéma de transmission de données et de contrôles utilisé par l'UE (115), le signal d'information de pool de ressources de substitution correspondant à une configuration d'un pool de ressources comportant une ou plusieurs ressources de contrôle du pool de ressources de contrôle et une ou plusieurs ressources de données d'un pool de ressources de données utilisé pour des transmissions pendant des communications sans fil, dans lequel chacune des une ou plusieurs ressources de contrôle du pool de ressources de contrôle est divisée en une première partie de fréquences et une seconde partie de fréquences, dans lequel la première partie de fréquences correspond à une partie de fréquences supérieure (572) et la seconde partie de fréquences correspond à une partie de fréquences inférieure (575), et dans lequel la configuration du pool de ressources est signalée en utilisant une pluralité de bearers radio, RB, sur la base d'une valeur RB de départ et d'une valeur RB de numéro pour les une ou plusieurs ressources de contrôle et les une ou plusieurs ressources de données par rapport à un décalage RB à la fois de zéro, « 0 », et d'une valeur RB maximale ;
un moyen pour sélectionner une première ressource de contrôle à partir de la première partie de fréquences du pool de ressources de contrôle sur la base du signal d'information de pool de ressources de substitution ;
un moyen pour transmettre une ou plusieurs informations de contrôle (556, 558, 576, 578) sur la première ressource de contrôle à partir de la première partie de fréquences du pool de ressources de contrôle ;
un moyen pour sélectionner une seconde ressource de contrôle à partir de la seconde partie de fréquences du pool de ressources de contrôle sur la base de la première ressource de contrôle ; et
un moyen pour transmettre les une ou plusieurs informations de contrôle (556, 558, 576, 578) sur la seconde ressource de contrôle à partir de la seconde partie de fréquences du pool de ressources de contrôle ; et
un moyen pour transmettre des informations de données (560, 562, 580, 582) sur les une ou plusieurs ressources de données après transmission des une ou plusieurs informations de contrôle (556, 558, 576, 578) sur la première ressource de contrôle à partir de la première partie de fréquences et sur la seconde ressource de contrôle à partir de la seconde partie de fréquences du pool de ressources de contrôle.

8. Un procédé de gestion de pools de ressources dans des communications sans fil, comprenant :
la transmission (702), à partir d'une entité de réseau (105), d'un signal d'information de pool de ressources de substitution à un ou plusieurs équipements utilisateurs, UE (115), pour modifier un schéma de transmission de données et de contrôles utilisé par les un ou plusieurs UE (115), le signal d'information de pool de ressources de substitution correspondant à une configuration d'un pool de ressources comportant une ou plusieurs ressources de contrôle d'un pool de ressources de contrôle et une ou plusieurs ressources de données d'un pool de ressources de données utilisé pour des transmissions pendant des communications sans fil, dans lequel chacune des une ou plusieurs ressources de contrôle du pool de ressources de contrôle est divisée en une première partie de fréquences et une seconde partie de fréquences, dans lequel la première partie de fréquences correspond à une partie de fréquences supérieure (572) et la seconde partie de fréquences correspond à une partie de fréquences inférieure (575), et dans lequel des transmissions à partir des un ou plusieurs équipements utilisateurs, UE (115), d'une ou plusieurs informations de contrôle sur chacune des une ou plusieurs ressources de contrôle se produisent dans la première partie de fréquence et la seconde partie de fréquences, et dans lequel la configuration du pool de ressources est signalée en utilisant une pluralité de bearers radio, RB, sur la base d'une valeur RB de départ et d'une valeur RB de numéro pour les une ou plusieurs ressources de contrôle et les une ou plusieurs ressources de données par rapport à un décalage RB à la fois de zéro, « o », et d'une valeur RB maximale ; et
la réception (704), au niveau de l'entité de réseau (105), d'un ou plusieurs signaux à partir d'au moins un des un ou plusieurs UE (115), dans lequel les un ou plusieurs signaux correspondent aux une ou plusieurs informations de contrôle (556, 558, 576, 578) sur les une ou plusieurs ressources de contrôle dans la première et la seconde partie de fréquences ; et
la réception, au niveau de l'entité de réseau (105), d'informations de données (560, 562, 580, 582) sur les une ou plusieurs ressources de données seulement après ladite réception des une ou plusieurs informations de contrôle.

9. Le procédé selon la revendication 8, dans lequel la configuration du pool de ressources est signalée en utilisant un bitmap répétitif à l'intérieur du pool de ressources.

10. Le procédé selon la revendication 8, dans lequel les ressources de contrôle et les ressources de données sont soumises à au moins un parmi un multiplexage par répartition dans le temps, TDM, avec des sous-trames entrelacées ou un multiplexage par répartition en fréquence, FDM.

11. Une entité de réseau (105) pour la gestion de pools de ressources dans des communications sans fil, comprenant :
un moyen pour transmettre, à partir de l'entité de réseau (105), un signal d'information de pool de ressources de substitution à un ou plusieurs équipements utilisateurs, UE (115), pour modifier un schéma de transmission de données et de contrôles utilisé par les un ou plusieurs UE (115), le signal d'information de pool de ressources de substitution correspondant à une configuration d'un pool de ressources comportant une ou plusieurs ressources de contrôle d'un pool de ressources de contrôle et une ou plusieurs ressources de données d'un pool de ressources de données utilisé pour des transmissions pendant des communications sans fil, dans lequel chacune des une ou plusieurs ressources de contrôle du pool de ressources de contrôle est divisée en une première partie de fréquences et une seconde partie de fréquences, dans lequel la première partie de fréquences correspond à une partie de fréquences supérieure (572) et la seconde partie de fréquences correspond à une partie de fréquences inférieure (575), et dans lequel des transmissions à partir des un ou plusieurs équipements utilisateurs, UE (115), d'une ou plusieurs informations de contrôle sur chacune des une ou plusieurs ressources de contrôle se produisent dans la première partie de fréquence et la seconde partie de fréquences, et dans lequel la configuration du pool de ressources est signalée en utilisant une pluralité de bearers radio, RB, sur la base d'une valeur RB de départ et d'une valeur RB de numéro pour les une ou plusieurs ressources de contrôle et les une ou plusieurs ressources de données par rapport à un décalage RB à la fois de zéro, « o », et d'une valeur RB maximale ; et
un moyen pour recevoir, au niveau de l'entité de réseau (105), un ou plusieurs signaux à partir d'au moins un des un ou plusieurs UE (115), dans lequel les un ou plusieurs signaux correspondent aux une ou plusieurs informations de contrôle (556, 558, 576, 578) sur les une ou plusieurs ressources de contrôle dans la première et la seconde partie de fréquences ; et
un moyen pour recevoir, au niveau de l'entité de réseau (105), des informations de données (560, 562, 580, 582) sur les une ou plusieurs ressources de données après ladite réception des une ou plusieurs informations de contrôle.

12. Un produit de programme de calculateur, comprenant :
un support lisible par calculateur comprenant un code de programme amenant un calculateur à réaliser un procédé selon une des revendications 1 à 6 ou 8 à 10, quand il est exécuté.
